# EUROPÄISCHE PATENTSCHRIFT

(11) **EP 2 290 270 B1**
(45) Veröffentlichungstag und Bekanntmachung des Hinweises auf die Patenterteilung: **28.03.2018**
(21) Anmeldenummer: 09011033.9
(22) Anmeldetag: 28.08.2009
(51) Int. Cl.: F16J 15/3232, F16J 15/3252

(54) **Dichtungsanordnung und deren Verwendung**
Seal assembly and its application
Agencement d'étanchéité et son utilisation

(43) Veröffentlichungstag der Anmeldung: 02.03.2011
(73) Patentinhaber: Carl Freudenberg KG, 69469 Weinheim (DE)
(72) Erfinder: Hofmann, Jens, 68305 Mannheim (DE); Begle, Stephan, 69469 Weinheim (DE)

(56) Entgegenhaltungen:
- DE-A1- 3 902 058
- DE-A1-102005 055 037
- DE-C1- 3 619 309
- DE-U- 7 328 356
- GB-A- 534 408
- GB-A- 1 453 122

## Beschreibung

### Technisches Gebiet

Die Erfindung betrifft eine Dichtungsanordnung und deren Verwendung.

### Stand der Technik

Eine solche Dichtungsanordnung ist aus der DE 36 19 309 C1 bekannt Die Dichtungsanordnung umfasst eine Kühlwasserpumpendichtung für einen Verbrennungsmotor, bei dem der gleitend an der Welle anliegenden Hauptdichtung kühlwasserseitig eine Schutzdichtung vorgeschaltet ist, die aus einem Filtervlies besteht, wobei das Filtervlies an dem die Hauptdichtung tragenden Gehäuse befestigt ist. Das Filtervlies weist ein Flächengewicht von 60 bis 900g/m² und eine Dicke von 1 mm bis 4 mm auf und besteht bevorzugt aus Polyesterfasern. Die Schutzdichtung berührt die abzudichtende Welle anliegend.

Aus der DE 39 02 058 A1 ist ebenfalls eine Dichtungsanordnung mit einem Dichtring und einem Filterring bekannt. Der Dichtring ist als Kassettendichtring ausgebildet und dichtet gegenüber einem Laufring ab, der auf die abzudichtende Fläche aufgepresst ist. Der Dichtring umfasst außerdem einen im Wesentlichen L-förmigen Stützkörper mit einem Axialschenkel und einem Radialschenkel, wobei am Radialschenkel die Dichtlippe des Dichtrings angeordnet ist. Im Bereich des offenen stirnseitigen Endes des Axialvorsprungs ist ein im Wesentlichen L-förmiger Filterring angeordnet, der ebenfalls einen Axialschenkel und einen Radialschenkel aufweist, wobei der Radialschenkel etwa die halbe radiale Höhe des Radialschenkels des Stützkörpers aufweist und der abzudichtenden Fläche deshalb mit großem radialen Abstand zugeordnet ist. Der Radialschenkel und der Axialschenkel des Filterrings sind etwa gleich lang, wobei der Filterring aus verpressten metallischen, organischen, mineralischen, natürlichen und / oder synthetischen Fasern besteht.

Der Laufring ist auf seiner dem abzudichtenden Raum zugewandten Seite radial nach außen und axial in Richtung Umgebung umgeformt, wobei das umgeformte Ende des Laufrings dem Übergangsbereich des Filterrings zugeordnet ist, in dem der Radialschenkel und der Axialschenkel des Filterrings zusammentreffen. Durch diese Gestalt ist der Laufring als Schleuderring ausgebildet.

Entscheidend für die Funktion der vorbekannten Dichtungsanordnung ist der Abstand des Radialschenkels des Filterrings zum umgeformten Ende des Schleuderrings, wobei die Größe dieses Abstands vom Anwendungsfall abhängig ist. Bestimmte Strömungsverhältnisse sollen sich entsprechend der Viskosität der abzudichtenden Flüssigkeit und der Temperaturverhältnisse einstellen können. Die zum abzudichtenden Medium hinweisende Oberfläche des Schleuderrings weist auf eine raue Oberfläche, so dass durch die Reibungskräfte die den Schleuderring umgebende Flüssigkeit bei Drehung des abzudichtenden Maschinenelements in Rotation versetzt werden soll.

Durch diese Rotation soll ein Flüssigkeitsstrom zum Filterring entstehen, wobei die durch Zentrifugalkraft nach außen geschleuderten Feststoffteilchen vom Filterring aufgefangen werden sollen. Zur Dichtlippe des Dichtrings soll nur noch ein gereinigter Flüssigkeitsstrom gelangen, der den zur Schmierung erforderlichen Flüssigkeitsfilm aufbaut, ohne dass abgelagerte Feststoffpartikel Verschleiß an der Dichtlippe des Dichtrings hervorrufen sollen. Das durch Reibungswärme an der Dichtlippe erhitzte abzudichtende Medium soll als Konvektionalstrom in den abzudichtenden Raum zurücklaufen, wobei gegebenenfalls der Filterring durch Abschwemmung der Feststoffteilchen gereinigt werden soll. Auch die Feststoffteilchen sollen dann in den abzudichtenden Raum zurückgelangen.

Aus der DE 73 28 356 U ist eine Dichtungsanordnung bekannt, umfassend einen Dichtring und einen Filterring aus Filtervlies, wobei der Filterring dem Dichtring auf der Umgebungsseite mit axialem Abstand benachbart zugeordnet ist und die abzudichtende Oberfläche des abzudichtenden Maschinenelements anliegend umschließt.

Aus der GB 534 408 A ist eine weitere Dichtungsanordnung bekannt, bei der ein filzartiger Filterring die abzudichtende Fläche anliegend berührt.

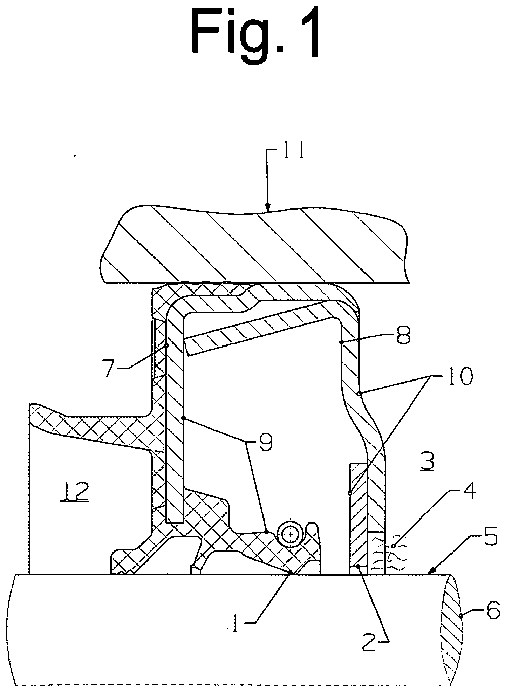

Aus der DE 10 2005 055 037 A1 ist ein Schrägkugellager bekannt, in dem eine Dichtungsanordnung zur Anwendung gelangt. Die Dichtungsanordnung umfasst einen Dichtring, der in einer der Lagerschalen ortsfest angeordnet ist und die andere Lagerschale durch eine Dichtlippe anliegend berührt. Der Dichtlippe kann zum Schutz eine weitere Dichtlippe in Richtung Umgebung benachbart zugeordnet sein, wobei eine Entlüftungsbohrung, die im Stützkörper des Dichtrings angeordnet ist, von einem Filterring aus Vlies überdeckt ist. Die Entlüftungsbohrung ist zum Druckausgleich vorgesehen, wobei die Abdeckung aus Vliesstoff einerseits den Austritt von Schmiermittel aus dem Lager in die Umgebung verhindert und andererseits das Eindringen von äußeren Schmutzpartikeln ins Lagerinnere ausschließt. In den Fig. 2 bis 5 ist der Filterring auf der der Umgebung zugewandten Seite des Dichtrings angeordnet.

Aus der GB-A 1 453 122 ist eine Dichtungsanordnung bekannt, die einen Dichtring und einen Filterring umfasst, wobei der Filterring dem Dichtring auf der dem abzudichtenden Raum zugewandten Seite mit axialem Abstand benachbart zugeordnet ist. Der Filterring berührt die abzudichtende Fläche des abzudichtenden Maschinenelements unter elastischer Vorspannung dichtend anliegend.

### Darstellung der Erfindung

Der Erfindung liegt die Aufgabe zugrunde, eine Dichtungsanordnung für andere abzudichtende Medien als Kühlwasser zu entwickeln. Die Reibung zwischen dem Filterring und dem abzudichtenden Maschinenelement soll verringert werden.

Diese Aufgabe wird durch eine Dichtungsanordnung gemäß Anspruch 1 gelöst. Auf vorteilhafte Ausgestaltungen nehmen die Unteransprüche Bezug. Außerdem soll die Dichtungsanordnung abweichend verwendet werden. Diese Aufgabe wird durch eine Verwendung gemäß Anspruch 7 gelöst.

Üblicherweise werden Dichtringe, die ein Schmiermittel abdichten, durch das abzudichtende Schmiermittel geschmiert, so dass sie während einer möglichst langen Gebrauchsdauer möglichst gleichbleibend gute Gebrauchseigenschaften aufweisen; der Verschleiß des Dichtringes soll durch die Schmierung auf ein Minimum reduziert werden.

Das setzt jedoch voraus, dass das abzudichtende Schmiermittel nach Möglichkeit keine Verunreinigungen, insbesondere keine abrasiv wirksamen Verunreinigungen, aufweist, die den Dichtring beschädigen könnten. Speziell bei der Verwendung von Dichtungsanordnungen in Getrieben oder Achsen von Kraftfahrzeugen ist eine Verunreinigung des abdichtenden Schmiermittels mit abrasiv wirksamen Partikeln jedoch nicht zu vermeiden, so dass der Dichtring der erfindungsgemäßen Dichtungsanordnung durch den in Richtung des abzudichtenden Raums axial vorgeschalteten Filterring aus Filtervlies vor einer Beaufschlagung mit diesen Verunreinigungen / Partikeln geschützt wird. Die Verunreinigungen werden durch den Filterring aus Filtervlies aufgenommen, und nur Schmiermittel, das frei von Verunreinigungen ist, gelangt durch den Filterring aus Filtervlies hindurch zu dem Dichtring, um diesen zu schmieren. Auch unter erschwerten Bedingungen, wie beispielsweise bei Verwendung der Dichtungsanordnung in einem Getriebe oder in einer Achse eines Kraftfahrzeugs, weist die Dichtungsanordnung gleichbleibend gute Gebrauchseigenschaften während einer langen Gebrauchsdauer auf, weil der Dichtring nur mit Schmiermittel beaufschlagt wird, aus dem die betriebsbedingt bei dieser Verwendung auftretenden Verunreinigungen herausgefiltert sind. Die erfindungsgemäße Dichtungsanordnung weist diese guten Gebrauchseigenschaften während einer langen Gebrauchsdauer auf, obwohl der Filterring der abzudichtenden Fläche berührungslos zugeordnet ist. Der radiale Abstand ist jedoch sehr gering.

Der radiale Abstand, mit dem der Filterring die abzudichtende Fläche des abzudichtenden Maschinenelements umschließt, ist ≤ 1 mm. Ein solcher Abstand ist einerseits klein genug, um einen guten Schutz der Dichtlippe vor abrasiven Partikeln aus dem abzudichtenden Medium zu gewährleisten und andererseits groß genug, um unerwünschte Reibung zwischen dem Filterring und der abzudichtenden Fläche sicher zu vermeiden. Bevorzugt beträgt der Abstand 0,4 mm. Eine Berührung von Filterring und abzudichtender Welle wird vermieden. Dadurch entstehen praktisch weder Reibleistung noch Wärme. Der Filterring hat, bezogen auf die abzudichtende Fläche des abzudichtenden Maschinenelements, keine Überdeckung.

Der Dichtring kann zum Beispiel als Radialwellendichtring ausgebildet sein und eine dynamisch beanspruchte Dichtlippe aufweisen, die axial in Richtung des abzudichtenden Raums vorgewölbt ist. Je nach Anwendungsfall kann die Dichtlippe durch eine Ringwendelfeder, die die Dichtlippe radial außenumfangsseitig umschließt, an die abzudichtende Fläche dichtend angedrückt werden. Generell besteht jedoch auch die Möglichkeit, dass die Dichtlippe die abzudichtende Fläche ohne Hilfsmittel, wie zum Beispiel die Ringwendelfeder, unter werkstoffbedingter elastischer Vorspannung dichtend umschließt.

Der Dichtring und der Filterring können jeweils an einem Stützkörper festgelegt sein und mit den zugehörigen Stützkörpern jeweils eine vormontierbare Einheit bilden. Hierbei ist von Vorteil, dass durch diese Modulbauweise unterschiedliche Dichtringe mit unterschiedlichen Filterringen kombinierbar sind. Die Stützkörper der jeweiligen Ringe bestehen bevorzugt aus einem zähharten Werkstoff, beispielsweise aus Blech oder einem polymeren Werkstoff. Die Gebrauchseigenschaften des Dichtrings und die Gebrauchseigenschaften des Filterrings können an den jeweiligen Anwendungsfall angepasst werden. Ist die Partikellast innerhalb des abzudichtenden Schmiermittels beispielsweise besonders groß und/oder der Werkstoff, aus dem der Dichtring besteht, besonders verschleißanfällig, kann ein Filterring aus einem Filtervlies vorgesehen sein, der eine besonders gute Filterwirkung aufweist. Soll demgegenüber der Dichtring besonders gut geschmiert werden und/oder das abzudichtende Schmiermittel weist eine nur sehr geringe Partikellast auf, kann das Filtervlies eine deutlich geringere Filterwirkung aufweisen und dadurch eine höhere Durchlässigkeit des abzudichtenden Schmiermittels zum Dichtring.

Bevorzugt kann es vorgesehen sein, dass die beiden vormontierbaren Einheiten miteinander verbunden sind und eine weitere Einheit bilden. Die weitere Einheit ist einfach zu handhaben, weil sie den Dichtring und den Filterring umfasst. Die Gefahr von Montagefehlern ist dadurch auf ein Minimum begrenzt.

Das Filtervlies des Filterrings ist bevorzugt laminiert. Dadurch wird eine bessere Bindung des Filtervlieses erreicht, und der Ausriss von Fasern während der bestimmungsgemäßen Verwendung der Dichtungsanordnung wird minimiert. Das ist insofern wichtig, als ein Ausriss von Fasern den Dichtmechanismus des Dichtrings gefährden könnte, weil zum Beispiel eine Rückfördereinrichtung des Dichtrings, die gegebenenfalls vorgesehen sein kann, um abzudichtendes Medium in Richtung des abzudichtenden Raums zurückzufördern, durch ausgerissene Fasern außer Funktion gesetzt werden kann.

Eine besonders gute Bindung des Filtervlieses wird bevorzugt durch eine NBR-Laminierung erreicht.

Das abzudichtende Medium kann durch ein Schmiermittel, zum Beispiel ein Schmieröl, gebildet sein.

Die zuvor beschriebene Dichtungsanordnung kann in Getrieben oder Achsen von Nutzfahrzeugen Verwendung finden, insbesondere in Getrieben oder Achsen von schnellen Kleintransportern. Durch die im Vergleich zu Personenkraftwagen deutlich größeren Abmessungen der Dichtungsanordnung bei ungefähr gleichen Drehzahlen, werden an Dichtungsanordnungen für derartige Verwendungen besonders hohe Anforderungen an die Funktion und die Haltbarkeit gestellt. Das Schmieröl ist häufig stärker verunreinigt. Der Dichtring wird durch den in Richtung des abzudichtenden Raums vorgeschalteten Filterring besonders zuverlässig geschützt.

Die Dichtungsanordnung kann auch in stationären Getrieben zur Anwendung gelangen.

### Kurzbeschreibung der Zeichnung

Ein Ausführungsbeispiel der erfindungsgemäßen Dichtungsanordnung wird nachfolgend näher beschrieben.

Dieses zeigt in schematischer Darstellung ein Ausführungsbeispiel, bei dem der Dichtring und der Filterring die weitere Einheit bilden.

### Ausführung der Erfindung

In der Figur ist eine Dichtungsanordnung gezeigt, die einen Dichtring 1 und einen Filterring 2 umfasst, wobei der Filterring 2 aus einem Filtervlies besteht. Der Filterring 2 ist dem Dichtring 1 auf der dem abzudichtenden Raum 3 zugewandten Seite mit axialem Abstand benachbart zugeordnet, wobei der abzudichtende Raum 3 in den hier gezeigten Ausführungsbeispielen in einem Getriebe oder in einer Achse eines Kraftfahrzeugs angeordnet ist. Innerhalb des abzudichtenden Raums 3 ist ein abzudichtendes Medium 4, hier ein Schmieröl, angeordnet, das gegenüber der Umgebung 12 abgedichtet wird. Das abzudichtende Maschinenelement 6 ist in den hier gezeigten Ausführungsbeispielen eine Achse oder eine Welle, wobei nur der Dichtring 1 die abzudichtende Fläche 5 des abzudichtenden Maschinenelements 6 anliegend umschließt. Der Filterring 2 umschließt die abzudichtende Fläche 5 des abzudichtenden Maschinenelements 6 mit einem radialen Abstand von 0,4 mm. Reibung zwischen dem Filterring 2 und der abzudichtenden Fläche 5 entsteht dadurch nicht.

Der Dichtring 1 ist mit dem Stützkörper 7, der Filterring 2 mit dem Stützkörper 8 verbunden, wobei die beiden Stützkörper 7, 8 jeweils aus einem Blech bestehen. Die vormontierbare Einheit 9 wird durch den Dichtring 1 und den entsprechenden Stützkörper 7, die vormontierbare Einheit 10 durch den Filterring 2 und den entsprechenden Stützkörper 8 gebildet, wobei diese vormontierbaren Einheiten 9, 10 zu der weiteren Einheit 11 zusammengefasst sind. Der axiale Abstand zwischen dem Dichtring 1 und dem Filterring 2 ist dadurch vorgegeben und stets konstant.

Der aus Filtervlies bestehende Filterring 2 sorgt dafür, dass Verunreinigungen, die sich im Schmiermittel innerhalb des abzudichtenden Raums 3 befinden, nur in sehr geringem Maß zum Dichtring 1 gelangen. Der Dichtring 1 weist dadurch nur einen sehr geringen Verschleiß und daraus resultierend gleichbleibend gute Gebrauchseigenschaften während einer langen Gebrauchsdauer auf.

## Patentansprüche

1. Dichtungsanordnung, umfassend einen mit einem abzudichtenden Medium (4) zumindest teilweise gefüllten abzudichtenden Raum (3) sowie ein abzudichtendes Maschinenelement (6), das als Achse oder Welle ausgebildet ist, mit einer abzudichtenden Fläche (5), die von einem Dichtring (1) anliegend und von einem Filterring (2) aus Filtervlies umschlossen ist, wobei der Filterring (2) dem Dichtring (1) auf der dem abzudichtenden Raum (3) zugewandten Seite mit axialem Abstand benachbart zugeordnet ist, **dadurch gekennzeichnet, dass** der Filterring (2) die abzudichtende Fläche (5) des abzudichtenden Maschinenelements (6) mit einem radialen Abstand ≤ 1 mm umschließt.

2. Dichtungsanordnung nach Anspruch 1, **dadurch gekennzeichnet, dass** der Abstand 0,4 mm beträgt.

3. Dichtungsanordnung nach einem der Ansprüche 1 oder 2, **dadurch gekennzeichnet, dass** der Dichtring (1) und der Filterring (2) jeweils an einem Stützkörper (7, 8) festgelegt sind und mit den zugehörigen Stützkörpern (7, 8) jeweils eine vormontierbare Einheit (9, 10) bilden.

4. Dichtungsanordnung nach Anspruch 3, **dadurch gekennzeichnet, dass** der Filterring (2) und der Stützkörper (8) miteinander verklebt und/oder verklemmt sind.

5. Dichtungsanordnung nach einem der Ansprüche 3 oder 4, **dadurch gekennzeichnet, dass** die vormontierbaren Einheiten (9, 10) miteinander verbunden sind und eine weitere Einheit (11) bilden.

6. Dichtungsanordnung nach einem der Ansprüche 1 bis 5, **dadurch gekennzeichnet, dass** das Filtervlies des Filterrings (2) laminiert ist.

7. Dichtungsanordnung nach einem der Ansprüche 1 bis 6, **dadurch gekennzeichnet, dass** das abzudichtende Medium (4) durch ein Schmiermittel gebildet ist.

8. Verwendung einer Dichtungsanordnung nach einem der Ansprüche 1 bis 7 in einem Getriebe oder in einer Achse eines Nutzfahrzeugs.

## Claims

1. Seal arrangement, comprising a space (3) which is to be sealed and is filled at least partially with a medium (4) to be sealed, and a machine element (6) which is to be sealed and is configured as an axle or a shaft, with a face (5) which is to be sealed and is enclosed by a sealing ring (1) in a bearing manner and by a filter ring (2) made from filter fleece, the filter ring (2) being assigned in an adjacent manner at an axial spacing to the sealing ring (1) on the side which faces the space (3) to be sealed, **characterized in that** the filter ring (2) encloses the face (5) to be sealed of the machine element (6) to be sealed at a radial spacing of ≤ 1 mm.

2. Seal arrangement according to Claim 1, **characterized in that** the spacing is 0.4 mm.

3. Seal arrangement according to either of Claims 1 and 2, **characterized in that** the sealing ring (1) and the filter ring (2) are fixed in each case on a supporting body (7, 8) and, with the associated supporting bodies (7, 8), in each case form a unit (9, 10) which can be preassembled.

4. Seal arrangement according to Claim 3, **characterized in that** the filter ring (2) and the supporting body (8) are adhesively bonded and/or clamped to one another.

5. Seal arrangement according to either of Claims 3 and 4, **characterized in that** the units (9, 10) which can be preassembled are connected to one another and form a further unit (11).

6. Seal arrangement according to one of Claims 1 to 5, **characterized in that** the filter fleece of the filter ring (2) is laminated.

7. Seal arrangement according to one of Claims 1 to 6, **characterized in that** the medium (4) to be sealed is formed by way of a lubricant.

8. Use of a seal arrangement according to one of Claims 1 to 7 in a transmission or in an axle of a commercial vehicle.

## Revendications

1. Agencement d'étanchéité, comprenant une chambre (3) à étanchéifier au moins en partie remplie d'un agent (4) à calfeutrer ainsi qu'un élément de machine (6) à étanchéifier réalisé sous la forme d'un essieu ou d'un arbre, avec une surface (5) à étanchéifier butant contre une bague d'étanchéité (1) et entourée par une bague filtrante (2) en non-tissé filtrant, la bague filtrante (2) étant associée, de façon avoisinante, à une certaine distance axiale, à la bague d'étanchéité (1) sur le côté orienté vers la chambre (3) à étanchéifier, **caractérisé en ce que** la bague filtrante (2) intègre la surface (5) à étanchéifier de l'élément de machine (6) à étanchéifier à une distance radiale ≤ 1 mm.

2. Agencement d'étanchéité selon la revendication 1, **caractérisé en ce que** la distance est de 0,4 mm.

3. Agencement d'étanchéité selon l'une quelconque des revendications 1 ou 2, **caractérisé en ce que** la bague d'étanchéité (1) et la bague filtrante (2) sont respectivement fixées à un corps de maintien (7, 8) et forment respectivement une unité (9, 10) prémontable avec le corps de maintien (7, 8) associé.

4. Agencement d'étanchéité selon la revendication 3, **caractérisé en ce que** la bague filtrante (2) et le corps de maintien (8) sont collés et/ou coincés l'un par rapport à l'autre.

5. Agencement d'étanchéité selon l'une quelconque des revendications 3 ou 4, **caractérisé en ce que** les unités (9, 10) prémontables sont reliées entre elles et forment une unité (11) supplémentaire.

6. Agencement d'étanchéité selon l'une quelconque des revendications 1 à 5, **caractérisé en ce que** le non-tissé filtrant de la bague filtrante (2) est laminé.

7. Agencement d'étanchéité selon l'une quelconque des revendications 1 à 6, **caractérisé en ce que** l'agent (4) à colmater est formé par un moyen lubrifiant.

8. Utilisation d'un agencement d'étanchéité selon l'une quelconque des revendications 1 à 7 dans une boîte de vitesses ou dans un essieu d'un véhicule utilitaire.
